# FASCICULE DE BREVET EUROPEEN

(11) **EP 3 040 228 B1**
(45) Date de publication et mention de la délivrance du brevet: **04.12.2019**
(21) Numéro de dépôt: 15191237.5
(22) Date de dépôt: 23.10.2015
(51) Int. Cl.: B60K 17/356, B60W 30/18, B60K 17/10

(54) **VEHICULE AUTOMOBILE A TRANSMISSION HYDRAULIQUE DE COUPLE MOTEUR**
KRAFTFAHRZEUG MIT HYDRAULISCHER ÜBERTRAGUNG DES MOTORDREHMOMENTS
MOTOR VEHICLE WITH HYDRAULIC TRANSMISSION OF ENGINE TORQUE

(30) Priorité: 10.11.2014 FR 1460837
(43) Date de publication de la demande: 06.07.2016
(73) Titulaire: Renault S.A.S., 92100 Boulogne-Billancourt (FR)
(72) Inventeur: BOUTRON, Olivier, 27940 AUBEVOYE (FR); PHILIPPE, Thierry, 27950 SAINT MARCEL (FR); LITTEE, Yann, 27950 SAINT PIERRE D'AUTILS (FR); MARTINEZ, Didier, 27920 SAINT ETIENNE SOUS BAILLEUL (FR)

(56) Documents cités:
- DE-A1- 3 545 481
- JP-A- S60 139 533
- US-A1- 2002 032 512

## Description

L'invention concerne les véhicules automobiles dotés d'un dispositif de transmission mécanique du couple moteur vers un premier essieu et d'un dispositif de transmission hydraulique du couple moteur vers un autre essieu de façon à disposer à volonté, selon les conditions de fonctionnement, de deux ou de quatre roues motrices, tel que connu de DE3545481, divulguant toutes les caractéristiques du préambule des revendications 1 et 4.

Le fonctionnement d'un dispositif de transmission hydraulique se base sur un circuit hydraulique situé entre l'essieu mené et l'essieu menant, l'essieu menant étant lui-même entraîné en rotation par le groupe motopropulseur. L'énergie mécanique de l'essieu menant est transmise à une pompe hydraulique qui injecte du fluide sous pression dans un circuit hydraulique couplant les deux essieux. Le fluide sous pression alimente ensuite un moteur hydraulique transmettant, de la sorte, le mouvement à l'essieu mené.

La transmission hydraulique est un mécanisme connu, notamment grâce au document FR 2 621 280. Le document DE 19510046 propose une amélioration et décrit un dispositif de pompes capable de fonctionner dans les deux sens, selon la direction de rotation des roues, tout en conservant les mêmes conduits haute pression et basse pression. La transmission hydraulique possède, cependant, le désavantage d'être limitée en vitesse de rotation, cette vitesse de rotation étant généralement inférieure à la vitesse maximale du véhicule automobile. Pour résoudre ce problème, le document FR 2 996 176 propose de programmer, grâce à un calculateur, le désaccouplement de la transmission hydraulique lorsque la vitesse du véhicule s'approche de cette vitesse limite.

Cependant, un passage brutal d'une motorisation à quatre roues motrices, aussi appelé mode 4x4, à une motorisation à deux roues motrices, aussi appelé mode 2x4, peut mener à un comportement problématique du véhicule en matière de tenue de route. En effet, si le désaccouplement de la transmission hydraulique se produit lorsqu'un couple important est transmis à l'essieu mené, l'essieu menant risque de patiner, pouvant ainsi conduire à une situation de non maîtrise du véhicule. Ce phénomène est particulièrement critique s'il se produit dans les virages. La solution consistant à programmer une vitesse limite de désaccouplement de la transmission est également problématique dans le cas d'une montée sur un sol peu adhérent. En effet, si le véhicule atteint la vitesse de désaccouplement alors qu'il est en train de gravir une pente glissante, la transmission entre l'essieu mené et l'essieu menant est soudainement interrompue. L'essieu menant risque donc de se mettre à patiner car la force motrice nécessaire pour déplacer le véhicule est trop importante pour ce seul essieu.

Le but de l'invention est d'éviter ce genre de situations tout en conservant l'architecture de base et le principe de fonctionnement d'une transmission hydraulique.

L'invention a donc pour objet, un véhicule automobile comportant un groupe motopropulseur, au moins deux essieux, un dispositif de transmission mécanique du couple moteur vers un premier essieu, un dispositif de transmission hydraulique du couple moteur vers un autre essieu associé à un automate de commande.

Des moyens de mesure de paramètres de fonctionnement du véhicule automobile sont également prévus dans le véhicule ainsi qu'un mécanisme d'accouplement/désaccouplement associé au dispositif de transmission hydraulique. L'automate de commande du dispositif de transmission hydraulique est capable d'agir sur le groupe motopropulseur pour modifier le couple moteur en fonction de la comparaison des paramètres de fonctionnement du véhicule automobile avec des grandeurs de référence.

Une diminution du couple moteur avant la commande de désaccouplement permet d'éviter un glissement de l'essieu avant lors d'un désaccouplement de la transmission. Un contrôle du couple permet également de forcer le véhicule à rester en dessous de la vitesse de désaccouplement si la situation le demande, notamment lors d'une montée sur un sol peu adhérent.

Avantageusement, le dispositif de transmission hydraulique comprend un circuit de fuite muni d'une vanne pilotée.

Un tel circuit de fuite offre la possibilité de commander le couple transmis entre les deux essieux en modulant le débit de fluide Cela permet de diminuer progressivement le couple transmis à l'essieu mené, avant de commander son désaccouplement.

Dans un mode de réalisation, les paramètres de fonctionnement du véhicule automobile mesurés comprennent au moins un paramètre choisi parmi la vitesse du véhicule, les vitesses de chaque roue, les accélérations du véhicule, l'orientation des roues, la vitesse de lacet du véhicule et la pression dans le circuit hydraulique de transmission.

La prise en compte de ces paramètres est importante pour commander de manière appropriée le couple moteur. En effet, ces paramètres permettent de renseigner l'automate sur le comportement du véhicule, en particulier sur sa tenue de route. Il est, en outre, judicieux d'informer l'automate sur la vitesse du véhicule, car l'accouplement de la transmission hydraulique dépend de cette vitesse.

L'invention a également pour objet un procédé de pilotage d'un dispositif de transmission hydraulique capable de transmettre de manière sélective tout ou partie du couple d'un groupe motopropulseur à deux roues d'un essieu d'un véhicule automobile. Selon ce procédé, on détermine des paramètres de fonctionnement du véhicule, on compare les paramètres de fonctionnement du véhicule avec des grandeurs de référence et on modifie le couple moteur en fonction du résultat de la comparaison.

Avantageusement, les paramètres de fonctionnement du véhicule automobile comprennent au moins un paramètre choisi parmi, la vitesse du véhicule, les vitesses de chaque roue, les accélérations du véhicule, l'orientation des roues, la vitesse de lacet du véhicule et la pression dans le circuit hydraulique de transmission.

Dans un mode de mise en œuvre, on agit en outre sur le couple transmis aux deux roues de l'essieu précité en réduisant la pression du fluide dans la conduite haute pression de la transmission hydraulique.

Dans un mode de mise en œuvre, on réduit la pression avant de cesser de transmettre le couple. Cette réduction de pression est effectuée en ouvrant une vanne d'un circuit de fuite situé entre le conduit haute et basse pression de la transmission.

Cela est particulièrement judicieux, car une telle vanne permet de réduire progressivement le couple transmis à l'essieu arrière avant de désaccoupler l'essieu arrière. Le passage d'une motorisation à quatre roues motrices à une motorisation à deux roues motrices s'effectue donc de manière progressive.

Préférentiellement, parmi les grandeurs de référence, on compte au moins deux vitesses de seuil.

Dans le cas d'un véhicule à deux essieux possédant l'essieu avant couplé au groupe motopropulseur, la première de ces vitesses est définie comme étant la vitesse à partir de laquelle la transmission cesse de transmettre le couple à l'essieu arrière. La deuxième de ces vitesses est définie comme étant la vitesse à partir de laquelle on agit sur le véhicule en vue du passage du mode à quatre roues motrices au mode à deux roues motrices. Elle est légèrement inférieure à la première.

Avantageusement, on mesure un glissement des roues et on compare ce glissement avec une valeur seuil. On commande, ensuite, une modification du couple moteur en fonction du résultat de la comparaison.

On peut, par exemple, mesurer le glissement en comparant la vitesse de l'essieu avant et celle de l'essieu arrière.

Dans un mode de mise en œuvre, le procédé peut comprendre en outre un calcul de la pente sur laquelle circule le véhicule.

Une manière d'estimer la pente sur laquelle circule le véhicule consiste à la déduire de la résistance à l'avancement. La connaissance de la pente est utile, car elle permet de savoir si la situation dans laquelle se trouve le véhicule nécessite l'entrainement simultané des deux essieux.

D'autres avantages et caractéristiques de l'invention apparaîtront à l'examen de la description détaillée d'un mode de réalisation de l'invention et de trois modes de mise en œuvre du procédé, donnés à titre d'exemples nullement limitatifs, et des dessins annexés, sur lesquels :
- la figure 1 représente, très schématiquement, un véhicule automobile selon un premier mode de réalisation de l'invention,
- la figure 2 représente, très schématiquement, un véhicule automobile selon un deuxième mode de réalisation de l'invention,
- la figure 3 présente un ordinogramme selon un premier mode de mise en œuvre de l'invention,
- la figure 4 présente un ordinogramme d'un deuxième mode de mise en œuvre de l'invention,
- la figure 5 présente un ordinogramme selon un troisième mode de mise en œuvre de l'invention.

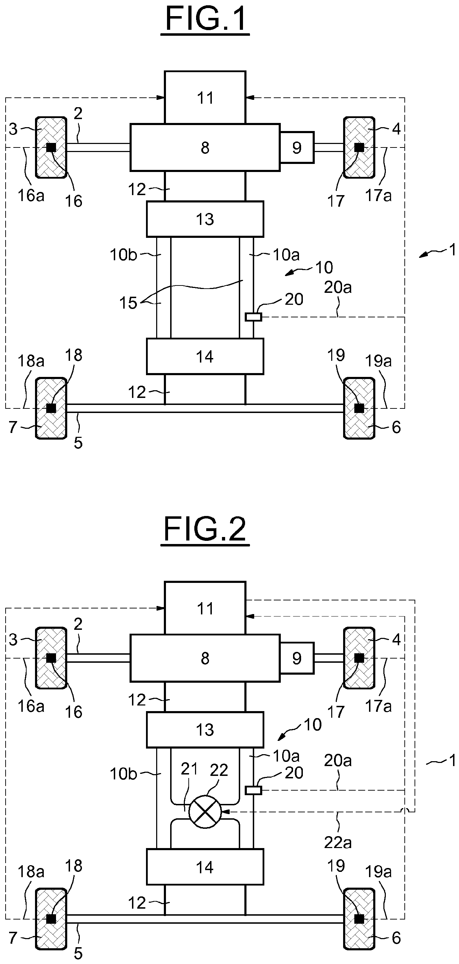

La figure 1 représente, très schématiquement, un véhicule automobile 1 pourvu d'un essieu avant 2 muni de deux roues 3 et 4 et d'un essieu arrière 5 également muni de deux roues 6 et 7. L'essieu avant 2 est entrainé par un groupe motopropulseur 8 thermique et/ou électrique au travers d'un dispositif de transmission 9. Un organe de transmission 10 actionné par un fluide hydraulique sous pression, par exemple une transmission hydrostatique, couple l'essieu avant 2 et l'essieu arrière 5. Ce dispositif de transmission 10 possède une conduite haute pression 10a et une conduite basse pression 10b. Les conduites haute et basse pression sont définies lors de la marche avant du véhicule.

Le véhicule automobile comprend en outre un automate de commande 11 associé au dispositif de transmission 10 et apte à agir sur le groupe motopropulseur 8 pour modifier le couple fourni. Le dispositif de transmission 10 peut être accouplé ou désaccouplé par rapport aux essieux 2 et 5 grâce aux mécanismes 12 prévus à cet effet.

Le dispositif de transmission 10 comprend une pompe hydraulique 13, entraînée par le groupe motopropulseur 8, et un moteur hydraulique 14. Un circuit hydraulique 15 relie la pompe 13 au moteur hydraulique 14, entrainant de la sorte l'essieu arrière 5.

Des capteurs de vitesses et d'accélérations 16, 17, 18 et 19 sont disposés sur chacune des roues 3, 4, 6 et 7 du véhicule automobile 1.

Un capteur de pression 20 est également installé dans la conduite haute pression 10a du dispositif de transmission 10. Les capteurs 16 à 20 peuvent communiquer leurs mesures à l'automate de commande 11 du dispositif de transmission 10 par des connexions 16a, 17a, 18a, 19a et 20a.

La figure 2, sur laquelle les éléments identiques à ceux de la figure 1 portent les mêmes références, représente un véhicule automobile comprenant les mêmes éléments constitutifs principaux que le véhicule automobile 1 de la figure 1. Le dispositif de transmission 10 comprend ici un circuit de fuite comportant une conduite de dérivation 21 munie d'une vanne pilotée 22. Une connexion 22a relie la vanne 22 à l'automate de commande 11. Un tel circuit de fuite permet de moduler le couple transmis à l'essieu en fonction de l'ouverture de la vanne 22.

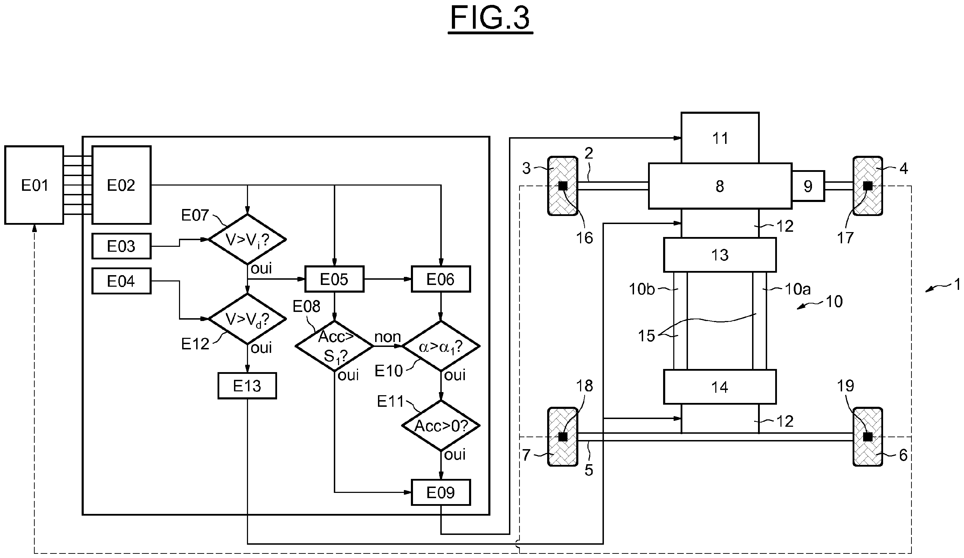

La figure 3 présente un ordinogramme d'un premier mode de mise en œuvre de l'invention illustrant le fonctionnement de l'automate 11. Le dessin de la figure 1 est inclus dans la figure 3, en vis-à-vis de l'ordinogramme, permettant ainsi de mieux saisir la mise en œuvre du procédé.

Ce procédé comprend une première étape E01 de détermination des paramètres de fonctionnement du véhicule. On mesure notamment la vitesse des roues 3, 4, 6 et 7, l'accélération transversale, l'orientation des roues 3, 4, 6 et 7 et la vitesse de lacet. Ces informations sont utilisées lors une étape de calcul E02, au cours de laquelle on calcule la vitesse de référence du véhicule, V. Le procédé comporte également une étape E03 au cours de laquelle on enregistre une vitesse de seuil Vi, définie comme étant la vitesse seuil à partir de laquelle on agit sur le véhicule en vue du passage d'un mode à quatre roues motrices à un mode à deux roues motrices. Lors de l'étape E04 on enregistre une vitesse de seuil V_{d}, définie comme étant la vitesse à partir de laquelle la transmission cesse de transmettre le couple à l'essieu arrière, le véhicule ne circulant plus avec quatre roues motrices mais seulement deux. Cette vitesse V_{d} est intimement liée à la vitesse de rotation maximale de la transmission 11. Vᵢ est définie comme étant inférieure à V_{d}. Lors de l'étape E05 suivante, on calcule, à partir de la vitesse de référence V, l'accélération du véhicule. On calcule également lors d'une étape E06 la pente *α* de la chaussée sur laquelle circule le véhicule. Le calcul se base sur la vitesse de référence V et sur les vitesses et accélérations réelles mesurées lors de l'étape E01. Lors d'une étape de comparaison suivante E07, on vérifie si la vitesse V est supérieure à la vitesse Vi. Si cette vitesse est dépassée, alors une série d'autres comparaisons sont effectuées. On vérifie au cours de l'étape E08 si l'accélération du véhicule se situe au-dessus d'un seuil S₁. Si l'accélération est supérieure au seuil, alors, lors de l'étape E09, on demande une baisse du couple moteur. Si lors de l'étape de comparaison E08, l'accélération est inférieure au seuil S₁, on passe à une étape E10 de comparaison dans laquelle on compare la pente *α* calculée à l'étape E06 avec une pente seuil *α*₁. Cette étape E06 est suivie d'une étape de comparaison E11 lors de laquelle on vérifie si l'accélération est positive. Si l'accélération est positive et la pente a est supérieure au seuil *α*₁, alors on passe à l'étape de commande E09 lors de laquelle on commande une baisse du couple moteur. Le procédé comprend aussi une étape de comparaison E12 dans laquelle on compare la vitesse de référence du véhicule avec la vitesse seuil V_{d}. Si cette vitesse seuil V_{d} est dépassée, on donne, à l'étape E13, l'ordre de désaccoupler la transmission en agissant sur les mécanismes 12.

Ce procédé permet de préparer le désaccouplement de la transmission. En effet, selon ce mode de mise en œuvre, dès que la vitesse de seuil Vi est dépassée, en d'autres termes, lorsque la vitesse du véhicule approche de la vitesse de désaccouplement V_{d}, on demande au groupe motopropulseur de diminuer le couple transmis aux roues avant 3 et 4. L'accélération du véhicule diminue donc en conséquence. Une fois que l'accélération est descendue en dessous d'un seuil S₁, la pente sur laquelle circule le véhicule est évaluée grâce à un calcul basé sur la résistance à l'avancement du véhicule, la masse du véhicule et les vitesses et accélérations réelles du véhicule. Cette pente est comparée avec une pente seuil *α*₁. Si la pente est plus importante que le seuil *α*₁ et que la vitesse du véhicule continue d'augmenter, on demande une baisse du couple moteur de manière à maintenir le véhicule en-dessous de la vitesse de désaccouplement V_{d}. On conserve ainsi quatre roues motrices. Si la pente est inférieure à la pente limite, on commande le désaccouplement avant de donner l'autorisation au moteur de suivre la consigne de couple demandée par le conducteur.

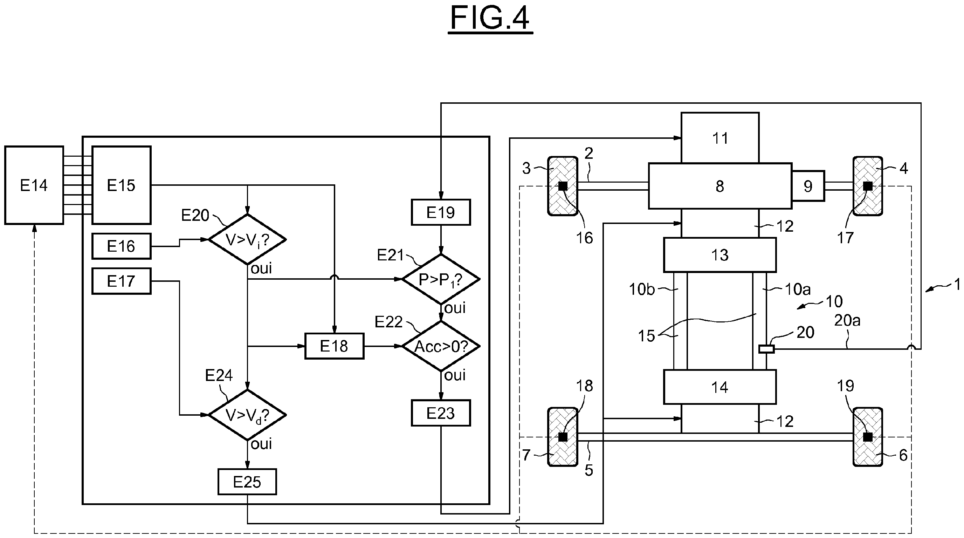

La figure 4 présente un ordinogramme d'un deuxième mode de mise en œuvre. Le dessin de la figure 1 est inclus dans la figure 4, en vis-à-vis de l'ordinogramme. Ce procédé comprend une première étape E14 de détermination des paramètres de fonctionnement du véhicule. Dans cette étape, on mesure, comme précédemment, la vitesse des roues 3, 4, 6 et 7, l'accélération transversale, l'orientation des roues 3, 4, 6 et 7 et la vitesse de lacet. Ces informations sont utilisées lors d'une étape de calcul E15. Lors de cette étape, on calcule une vitesse de référence du véhicule V. Le procédé comporte également des étapes E16 et E17 dans lesquelles on enregistre respectivement les vitesses de seuils Vᵢ et V_{d}. Lors d'une étape E18, on calcule à partir de la vitesse de référence V l'accélération du véhicule. Le procédé comprend également une étape E19 dans laquelle on détermine la pression P régnant dans la conduite haute pression du dispositif de transmission 10. Cette pression est déterminée grâce au capteur de pression 20. Le procédé comprend une première étape de comparaison E20 lors de laquelle on vérifie si la vitesse V est supérieure à la vitesse de seuil Vi. Si la vitesse V est supérieure à la vitesse Vi, le procédé se poursuit par des étapes de comparaison E21 et E22. Lors de l'étape E21 on vérifie si la pression P est supérieure à un seuil de pression P₁. Lors de l'étape E22, on vérifie si l'accélération est positive. Si ces deux critères sont réunis, on passe à une étape de commande E23 dans laquelle on demande une baisse du couple moteur. Le procédé comprend en outre une étape de comparaison E24 dans laquelle on compare la vitesse de référence V et la vitesse V_{d}. Si la vitesse V dépasse la vitesse de seuil V_{d}, on commande, lors d'une étape E25, l'arrêt de la transmission du couple en agissant sur les mécanismes 12 aptes à désaccoupler la transmission hydraulique 10.

Selon ce deuxième mode de mise en œuvre du procédé, on utilise une mesure P de pression dans la conduite haute pression du dispositif de transmission hydraulique. Ainsi, à l'approche de la vitesse de désaccouplement V_{d} et une fois la vitesse seuil Vᵢ dépassée, on demande au moteur 8 de diminuer le couple transmis à l'essieu avant. L'accélération diminue donc de manière à ce que la pression mesurée reste en-dessous du seuil P₁. Une fois la vitesse V_{d} atteinte, on commande le passage à un mode de motorisation 2x4, en désaccouplant la transmission hydraulique. Le moteur est ensuite à nouveau autorisé à suivre la consigne de couple du conducteur. Si la vitesse de référence du véhicule reste en-dessous du seuil V_{d}, alors la transmission reste accouplée et le véhicule circule avec quatre roues motrices.

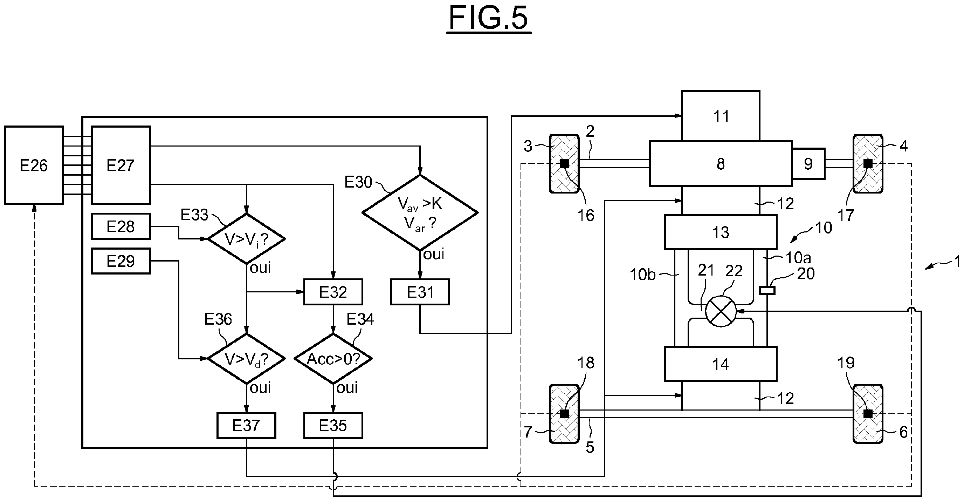

La figure 5 présente un ordinogramme d'un troisième mode de mise en œuvre du procédé. Le dessin de la figure 2 est inclus dans la figure 5, en vis-à-vis de l'ordinogramme. Ce procédé comprend une première étape E26 de détermination des paramètres de fonctionnement du véhicule. Lors de cette étape, on mesure, comme précédemment, la vitesse des roues 3, 4, 6 et 7, l'accélération transversale, l'orientation des roues 3, 4, 6 et 7 et la vitesse de lacet. Ces informations sont utilisées lors d'une étape de calcul E27. Lors de cette étape, on calcule une vitesse de référence du véhicule V, ainsi que la vitesse de rotation de l'essieu avant Vₐᵥ entrainé par le groupe motopropulseur 8 et la vitesse de rotation de l'essieu arrière Vₐᵣ entrainé par la transmission hydraulique 10. Le procédé comporte également des étapes E28 et E29 dans lesquelles on enregistre respectivement les vitesses de seuils Vᵢ et V_{d}. Le procédé comprend aussi une étape de comparaison E30 dans lequel on compare la vitesse de l'essieu arrière Vₐᵣ et de la vitesse de l'essieu avant Vₐᵥ. On vérifie si la vitesse de l'essieu avant est supérieure à K fois la vitesse de l'essieu arrière, où K est une constante supérieure ou égale à 1. Si tel est le cas lors d'une étape de commande E31 on commande une baisse de couple au groupe motopropulseur 8. On calcule à partir de la vitesse de référence V l'accélération du véhicule (étape E32). Le procédé comprend une étape de comparaison E33 dans lequel on vérifie si la vitesse de référence V est supérieure à la vitesse de seuil Vi. Le procédé se poursuit avec une autre étape de comparaison E34 lors de laquelle on vérifie si l'accélération du véhicule est positive. Si la vitesse V est supérieure à la vitesse de seuil Vᵢ et l'accélération est positive, on commande, lors d'une étape E35, une diminution de la pression dans la conduite haute pression du circuit haute pression de la transmission en demandant l'ouverture de la vanne 22 du circuit de dérivation 21. Le procédé comprend également une étape de comparaison E36 lors de laquelle on compare la vitesse de référence à la vitesse de seuil V_{d}. Si la vitesse de référence du véhicule est supérieure à la vitesse de seuil V_{d}, on commande, lors d'une étape E37, l'arrêt de la transmission du couple en agissant sur les mécanismes de désaccouplement 12.

Selon ce mode de mise en œuvre, on diminue le couple transmis par la transmission hydraulique en diminuant la pression dans le conduit haute pression de la transmission. Lors de ce passage progressif d'un mode 4x4 à un mode 2x4, on vérifie si un éventuel glissement des roues se produit en comparant les vitesses de rotation de l'essieu avant et de l'essieu arrière. Si un écart entre la vitesse de l'essieu avant et la vitesse de l'essieu arrière est mesuré, alors on réduit le couple moteur afin que le glissement diminue. Le passage à deux roues motrices est effectué une fois la vitesse V_{d} dépassée, après cette éventuelle réduction de couple.

L'invention permet donc de désaccoupler le dispositif de transmission tout en conservant une bonne tenue de route du véhicule. Cela est rendu possible grâce à un automate de commande de la transmission capable d'agir sur le groupe motopropulseur afin de modifier le couple moteur en fonction des paramètres de fonctionnement du véhicule.

Dans la description et les exemples décrits précédemment, le véhicule automobile possède deux essieux et quatre roues. Cependant, l'invention ne se limite pas à cette configuration et concerne aussi bien des véhicules automobiles possédant un nombre d'essieux et un nombre de roues par essieu supérieur à deux.

## Revendications

1. Véhicule automobile (1) comportant un groupe motopropulseur (8), au moins deux essieux (2,5) portant les roues du véhicule, un dispositif (9) de transmission mécanique du couple moteur vers un premier essieu, un dispositif (10) de transmission hydraulique du couple moteur vers un autre essieu associé à un automate de commande (11), des moyens de mesure (16,17,18,19) de paramètres de fonctionnement du véhicule automobile et un mécanisme (12) d'accouplement/désaccouplement associé au dispositif de transmission hydraulique, **caractérisé en ce que** l'automate de commande du dispositif de transmission hydraulique est capable d'agir sur le groupe motopropulseur pour modifier le couple moteur en fonction de la comparaison desdits paramètres de fonctionnement du véhicule automobile avec des grandeurs de référence avant la commande de désaccouplement.

2. Véhicule automobile selon la revendication 1 dans lequel lesdits paramètres de fonctionnement du véhicule automobile comprennent au moins un paramètre choisi parmi la vitesse du véhicule, les vitesses de chaque roue, la vitesse de lacet, l'accélération du véhicule, l'orientation des roues, la résistance à l'avancement du véhicule et la pression dans le circuit hydraulique de transmission.

3. Véhicule automobile selon l'une des revendications 1 et 2, dans lequel le dispositif de transmission hydraulique comprend un conduit de dérivation (21) muni d'une vanne (22) pilotée par l'automate de commande de la transmission.

4. Procédé de pilotage d'un dispositif (10) de transmission hydraulique capable de transmettre de manière sélective tout ou partie du couple d'un groupe motopropulseur (8) à au moins deux roues (18, 19) d'au moins un essieu (5) d'un véhicule automobile comportant au moins deux essieux (2, 5), un dispositif de transmission mécanique de couple moteur vers un autre essieu (2) et un mécanisme (12) d'accouplement/désaccouplement associé au dispositif de transmission hydraulique, **caractérisé en ce qu'**on détermine des paramètres de fonctionnement du véhicule, on compare lesdits paramètres de fonctionnement du véhicule avec des grandeurs de référence et on modifie le couple moteur en fonction du résultats de la comparaison avant la commande de désaccouplement de la transmission hydraulique.

5. Procédé selon la revendication 4, dans lequel lesdits paramètres de fonctionnement du véhicule automobile comprennent au moins un paramètre choisi parmi, la vitesse du véhicule, les vitesses de chaque roue, la vitesse de lacet, les accélérations du véhicule, l'orientation des roues, la résistance à l'avancement du véhicule et la pression dans le circuit hydraulique de transmission.

6. Procédé selon l'une des revendications 4 et 5, dans lequel on agit en outre sur le couple transmis par la transmission en diminuant la pression du fluide dans la conduite haute pression (10a) de la transmission hydraulique (10).

7. Procédé selon la revendication 6, dans lequel on diminue la pression dans la conduite haute pression (10a) avant de cesser de transmettre le couple.

8. Procédé selon l'une quelconque des revendications 4 à 7, dans lequel, parmi les grandeurs de références, on compte au moins deux vitesses de seuil.

9. Procédé selon l'une quelconque des revendications 4 à 8, dans lequel on mesure un glissement des roues, on compare ce glissement avec une valeur seuil et on commande une modification du couple moteur en fonction du résultat de la comparaison.

10. Procédé selon l'une quelconque des revendications 4 à 9 comprenant une estimation de la pente de la chaussée sur laquelle le véhicule automobile circule.

## Patentansprüche

1. Kraftfahrzeug (1), umfassend einen Antriebsstrang (8), mindestens zwei die Räder des Fahrzeugs tragende Achsen (2, 5), eine Vorrichtung (9) zur mechanischen Motordrehmomentübertragung zu einer ersten Achse, eine Vorrichtung (10) zur hydraulischen Motordrehmomentübertragung zu einer anderen Achse, die einem Steuerautomaten (11) zugeordnet ist, Messeinrichtungen (16, 17, 18, 19) zum Messen von Betriebsparametern des Kraftfahrzeugs und einen Ein-/Auskuppelmechanismus (12), welcher der hydraulischen Kraftübertragungsvorrichtung zugeordnet ist, **dadurch gekennzeichnet, dass** der Steuerautomat der hydraulischen Kraftübertragungsvorrichtung in der Lage ist, auf den Antriebsstrang einzuwirken, um das Motordrehmoment in Abhängigkeit vom Vergleich der Betriebsparameter des Kraftfahrzeugs mit Bezugsgrößen vor dem Auskuppelkommando zu ändern.

2. Kraftfahrzeug nach Anspruch 1, bei dem die Betriebsparameter des Kraftfahrzeugs mindestens einen Parameter umfassen, der unter der Geschwindigkeit des Fahrzeugs, der Geschwindigkeit jedes Rades, der Giergeschwindigkeit, der Beschleunigung des Fahrzeugs, der Ausrichtung der Räder, dem Fahrwiderstand des Fahrzeugs und dem Druck im hydraulischen Kraftübertragungskreislauf gewählt ist.

3. Kraftfahrzeug nach einem der Ansprüche 1 und 2, bei dem die Vorrichtung zur hydraulischen Kraftübertragung eine Abzweigleitung (21) umfasst, die mit einem Ventil (22) versehen ist, das vom Steuerautomaten der Kraftübertragung gesteuert wird.

4. Verfahren zur Steuerung einer Vorrichtung (10) zur hydraulischen Kraftübertragung, die in der Lage ist, das gesamte oder einen Teil des Drehmoments eines Antriebsstrangs (8) selektiv an mindestens zwei Räder (18, 19) mindestens einer Achse (5) eines Kraftfahrzeugs zu übertragen, das mindestens zwei Achsen (2, 5), eine Vorrichtung zur mechanischen Motordrehmomentübertragung zu einer anderen Achse (2) und einen Ein-/Auskuppelmechanismus (12), welcher der Vorrichtung zur hydraulischen Kraftübertragung zugeordnet ist, umfasst, **dadurch gekennzeichnet, dass** man die Betriebsparameter des Fahrzeugs bestimmt, man diese Betriebsparameter des Fahrzeugs mit Bezugsgrößen vergleicht und man das Motordrehmoment in Abhängigkeit vom Ergebnis des Vergleichs vor dem Kommando zum Auskuppeln der hydraulischen Kraftübertragung ändert.

5. Verfahren nach Anspruch 4, bei dem die Betriebsparameter des Kraftfahrzeugs mindestens einen Parameter umfassen, der unter der Geschwindigkeit des Fahrzeugs, der Geschwindigkeit jedes Rades, der Giergeschwindigkeit, den Beschleunigungen des Fahrzeugs, der Ausrichtung der Räder, dem Fahrwiderstand des Fahrzeugs und dem Druck im hydraulischen Kraftübertragungskreislauf gewählt ist.

6. Verfahren nach einem der Ansprüche 4 und 5, bei dem man ferner auf das von der Kraftübertragung übertragene Drehmoment einwirkt, indem der Druck der Flüssigkeit in der Hochdruckleitung (10a) der hydraulischen Kraftübertragung (10) verringert wird.

7. Verfahren nach Anspruch 6, bei dem man den Druck in der Hochdruckleitung (10a) verringert, bevor das Übertragen des Drehmoments beendet wird.

8. Verfahren nach einem der Ansprüche 4 bis 7, bei dem zu den Bezugsgrößen mindestens zwei Schwellengeschwindigkeiten gehören.

9. Verfahren nach einem der Ansprüche 4 bis 8, bei dem man einen Schlupf der Räder misst, diesen Schlupf mit einem Schwellenwert vergleicht und eine Änderung des Motordrehmoments in Abhängigkeit von dem Ergebnis dieses Vergleichs steuert.

10. Verfahren nach einem der Ansprüche 4 bis 9, umfassend eine Schätzung der Neigung der Fahrbahn, auf der das Kraftfahrzeug fährt.

## Claims

1. Motor vehicle (1) comprising a powertrain (8), at least two axles (2, 5) bearing the wheels of the vehicle, a device (9) for mechanical transmission of the engine torque to a first axle, a device (10) for hydraulic transmission of the engine torque to another axle associated with an automatic control unit (11), means (16, 17, 18, 19) for measuring operating parameters of the motor vehicle and a coupling/decoupling mechanism (12) associated with the hydraulic transmission device, **characterized in that** the automatic control unit of the hydraulic transmission device is able to act on the powertrain in order to modify the engine torque in dependence on the comparison of said operating parameters of the motor vehicle with reference values prior to the decoupling command.

2. Motor vehicle according to Claim 1, in which said operating parameters of the motor vehicle comprise at least one parameter chosen from among the speed of the vehicle, the speeds of each wheel, the yaw rate, the acceleration of the vehicle, the orientation of the wheels, the drag on the vehicle and the pressure in the transmission hydraulic circuit.

3. Motor vehicle according to one of Claims 1 and 2, in which the hydraulic transmission device comprises a bypass line (21) provided with a valve (22) that is controlled by the automatic control unit of the transmission.

4. Method for controlling a hydraulic transmission device (10) capable of selectively transmitting all or part of the torque from a powertrain (8) to at least two wheels (18, 19) of at least one axle (5) of a motor vehicle comprising at least two axles (2, 5), a device for mechanical transmission of the engine torque to another axle (2) and a coupling/decoupling mechanism (12) associated with the hydraulic transmission device, **characterized in that** operating parameters of the vehicle are determined, said operating parameters of the vehicle are compared with reference values, and the engine torque is modified in dependence on the results of the comparison prior to the hydraulic transmission decoupling command.

5. Method according to Claim 4, in which said operating parameters of the motor vehicle comprise at least one parameter chosen from among the speed of the vehicle, the speeds of each wheel, the yaw rate, the accelerations of the vehicle, the orientation of the wheels, the drag on the vehicle and the pressure in the transmission hydraulic circuit.

6. Method according to either of Claims 4 and 5, in which the torque transmitted by the transmission is also acted upon by reducing the pressure of the fluid in the high-pressure line (10a) of the hydraulic transmission (10).

7. Method according to Claim 6, in which the pressure in the high-pressure line (10a) is reduced before transmission of the torque ceases.

8. Method according to any one of Claims 4 to 7, in which the reference values include at least two threshold speeds.

9. Method according to any one of Claims 4 to 8, in which wheel slip is measured, this slip is compared to a threshold value and a modification of the engine torque is commanded in dependence on the result of the comparison.

10. Method according to any one of Claims 4 to 9, including an estimate of the slope of the roadway on which the motor vehicle is travelling.
